# EUROPEAN PATENT APPLICATION

(11) **EP 1 626 013 A1**
(43) Date of publication of application: **15.02.2006**
(21) Application number: 05076744.1
(22) Date of filing: 28.07.2005
(51) Int. Cl.: B65G 1/137

(54) **Method for collecting goods in warehouse and for handling returned goods**

(30) Priority: 09.08.2004 BE 200400389
(71) Applicant: EGEMIN N.V., 2070 Zwijndrecht (BE)
(72) Inventor: Vercammen, Jan Maria Ludovicus, B-2440 Geel (BE)
(74) Representative: Donné, Eddy

(57) **Abstract**

Method for collecting goods in a warehouse, more particularly slow-running goods, and for handling returned goods, whereby the slow-running goods are part of an order which is processed by a central computer, characterized in that the above-mentioned slow-running goods are placed on a first transportation system (5); in that a suitable packaging (16) is manufactured for the order concerned which is loaded on a second transportation system (8) which runs under the first transportation system (5); and in that the central computer controls both transportation systems (5 and 8) in such a manner that the slow-running goods are guided above the corresponding packaging (16) and are deposited in the packaging (16) concerned.

## Description

The present invention concerns a method for collecting goods in a warehouse, more particularly what are called slow-running goods, and for handling returned goods.

By slow-running goods are meant goods with a restricted number of logistic movements from and to the warehouse. In the case of for example a mail-order firm, it concerns a method for handling goods which are ordered relatively few or which are thus incorporated in only a limited number of orders.

It is known that such slow-running goods are packed manually, whereby, depending on the size of a certain order, the slow-running product concerned is put in a packaging with suitable dimensions.

Hereby, depending on the size of the order as a whole, the above-mentioned packaging must be manufactured first or selected from a series of pre-manufactured packagings with different sizes.

A disadvantage of this known method is that it is very time-consuming and expensive, and that the capacity of a person handling such slow-running goods is restricted, since several additional operations are required, such as selecting and/or manufacturing a packaging with suitable dimensions, collecting the required slow-running goods and the like.

Another disadvantage of this method is that there is a risk of the wrong product being placed in a certain packaging.

Another known method is what is called "batch picking", which method consists in placing the slow-running goods on a transportation system and guiding them via several branches of said transportation system along several collecting points, where they are deposited in a packaging having the required dimensions at the end of each branch.

A disadvantage of this method is that it can only be realized by means of a very extensive device, whereby a branch and a collecting point are provided for each order.

The present invention aims to remedy one or several of the above-mentioned and other disadvantages.

To this end, the invention concerns a method for collecting goods in a warehouse, more particularly what are called slow-running goods, and for handling returned goods, whereby the slow-running goods together with other goods are part of an order which is processed by a central computer, whereby, in a first work station, the above-mentioned slow-running goods which are supplied in a specific order by an automatic supply system are placed on a first transportation system as a function of the instructions of a central computer; in another station, by order of the above-mentioned central computer, a suitable packaging for the order concerned is manufactured and loaded on a second transportation system which runs under the first transportation system; the central computer controls both above-mentioned transportation systems in such a manner that the slow-running goods are guided above, or practically above, the corresponding packaging on the second transportation system, and these goods are subsequently deposited in the packaging concerned, after which this packaging is carried further by the second transportation system to further finish the order.

An advantage thereof is that a person placing the slow-running goods on the above-mentioned first transportation system does not have to manufacture and/or select any packagings, as is the case with the known methods, such that said person only has to preoccupy himself with "peaking" the slow-running goods, and thus can handle more goods, which improves the feed-through capacity of the goods to be handled and the orders of the warehouse.

Another advantage thereof is that applying such a method according to the invention can be done with a relatively compact device, without any transportation system for the supply of packagings, with many branches.

Since everything is controlled and synchronized by the central computer, the risk of an incorrect delivery resulting from the goods being put incorrectly in a corresponding packaging is practically excluded.

In order to better explain the characteristics of the invention, the following preferred applications of the method for collecting goods in a warehouse and for handling returned goods according to the invention is given as an example only, without being limitative in any way, with reference to the accompanying drawings, in which:
figure 1 represents an arrangement for applying the method according to the invention;
figure 2 represents the part indicated by F2 in figure 1 to a larger scale;
figure 3 represents a section according to line III-III in figure 2;
figure 4 represents a variant of an arrangement for applying a method according to the invention.

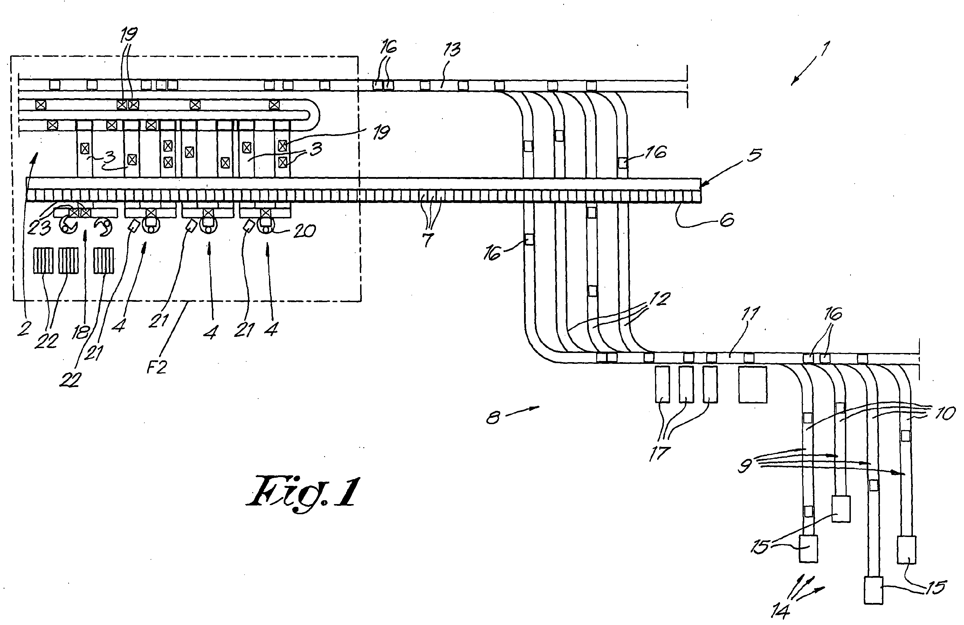

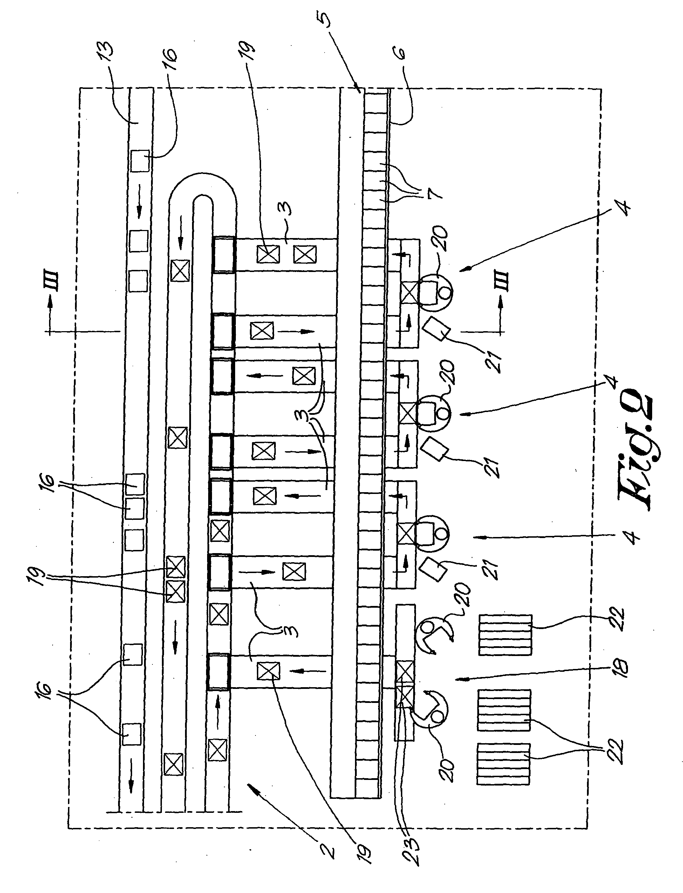

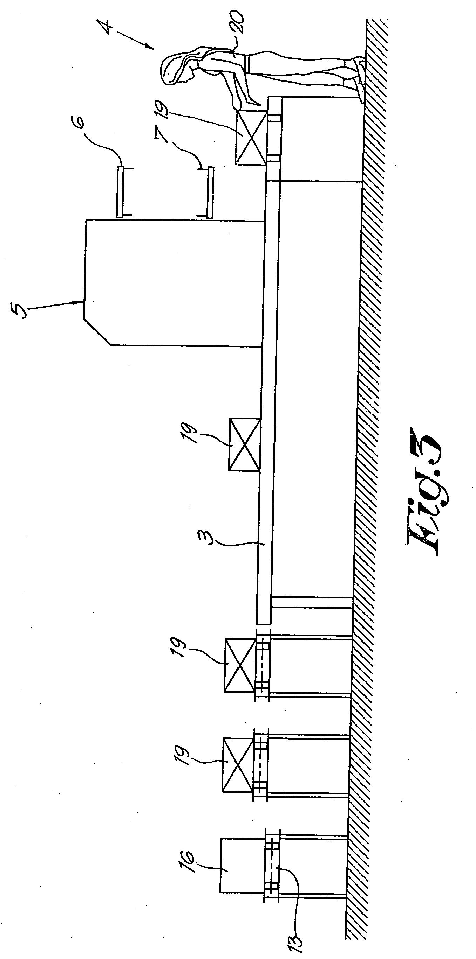

The device 1, as represented in figures 1 to 3, mainly consists of a supply system 2 for supplying slow-running goods from a non-represented warehouse, which supply system 2 in this case is made in the shape of a number of conveyor belts 3 erected next to one another, along which is erected a number of first work stations 4.

Moreover, past the above-mentioned work stations 4 runs a first transportation system 5 or what is called a "sorter", which may be built for example in the known manner of a conveyor belt 6 onto which are fixed a number of bins 7, one after the other, and whereby each of these bins 7 is provided with an emptying mechanism which is not represented in the figures, for example in the shape of a pusher mechanism which makes it possible to push the content of the bins 7 off the first transportation system 5.

The device 1 comprises a second transportation system 8 which is in this case made in the shape of conveyor belts 9 which are each formed of a buffer path 10 which is connected to a central feed path 11 which is common to all the above-mentioned conveyor belts 9 and a branch 12 of said central feed path, which branch 12 runs under the above-mentioned first transportation system 5 and is connected to a common discharge path 13 running through the warehouse along the storage rooms for loading less slowly running and fast-running goods.

At the start 14 of each of the above-mentioned buffer paths 10 is provided a station with in this case an automatic manufacturing station 15 for manufacturing packagings 16 in the shape of boxes or the like. It is clear that the above-mentioned station can also be equipped with an operator 10 who manufactures boxes manually.

At the above-mentioned central feed path 11 are provided in this case four automatic printing stations 17 for labeling among others the above-mentioned packagings 16.

It is clear that the above-mentioned second transportation system 8 can also be made in the shape of a single conveyor belt 9, which extends under the above-mentioned first transportation system 5.

Also, one or several second work stations 18 are further provided, situated next to the above-mentioned supply system 2 and the above-mentioned first transportation system 5.

The working of such a device 1 which makes use of a method according to the invention is very simple and as follows.

Initially, all slow-running goods are situated in containers 19 or the like in a warehouse.

When orders come in, the order data are processed by a central computer which is not represented in the figures, whereby the volume and the composition of each order are the major data.

On the basis of these data, per type of slow-running goods, a container 19 is automatically picked from the warehouse and carried to the first work stations 4 via the supply system 2.

At each first work station 4 stands an operator 20, for whom a container 19 is brought to a standstill, and by means of a display 21 or the like is indicated per order by the above-mentioned central computer how many of these goods have to be taken out of the container 19 concerned and have to be loaded onto the first transportation system 5, per order, each in a different bin 7.

Next, the operator must confirm whether the requested operation has been carried out, for example via a push button or the like which is not represented in the figures.

When all the orders with goods from the container 19 concerned have been treated, this container 19 is carried back to the warehouse with the remaining goods, and a following container 19 is offered to the operator 20.

The central computer keeps track of what goods or products for a specific order are situated in a specific bin 7.

In the meanwhile, the central computer transmits a signal to one of the above-mentioned automatic manufacturing stations 15, as a result of which a suitable packaging 16 is manufactured which may contain the slow-running as well as the other goods of that specific order.

This packaging 16 is then automatically placed on the buffer path 10.

After an aforesaid slow-running product has been put on the first transportation system 5, a packaging 16 is put from the buffer path 10 onto the central feed path 11.

It is clear that such a packaging 16 can also be placed on the above-mentioned buffer path 10 at a sooner or later time.

Next, the empty packaging 16 is carried past the automatic pusher stations 17, whereby a barcode is first printed on the above-mentioned packaging 16, such that each packaging 16 can always be followed by placing scanners which are not represented in the figures along the trajectory.

Next, possible packing notes, invoices and the like are printed, folded and deposited in each of the above-mentioned packagings 16.

The above-mentioned central computer now makes sure that the above-mentioned packagings 16 are put from the buffer path 10 onto the central feed path 11 at the right time, such that the above-mentioned packaging 16 arrives at the above-mentioned branches 12 and at the first transport device 5 at exactly the right moment.

The above-mentioned slow-running goods, which have been carried on the first transportation system 5 to above one of the above-mentioned branches 12 of the second transportation system 8 in the meantime, are pushed out of the above-mentioned bin 7 in the known manner by the above-mentioned emptying mechanism, as a result of which they end up in the packaging 16 concerned of the corresponding order.

It is clear that the above-mentioned central computer hereby has to make sure that each of the above-mentioned slow-running goods are deposited in a corresponding packaging 16.

Use is hereby made of what is called "window tracking", whereby an imaginary space on the second transportation system 8 is allocated to each packaging 16, whose surface area corresponds to the size of the above-mentioned packaging 16.

After the appropriate slow-running goods have been deposited in a packaging 16, the packaging is carried through the warehouse via the above-mentioned common discharge path 13 for collecting less slowly running and fast-running goods that are part of the same order.

This manner of order collecting is called "zone-picking" and is the most appropriate for the less slowly running and fast-running goods.

By starting with adding the slow-running goods, only the containers 19 are brought to the first work station 4, whose content is part of an order, and all the slow-running goods of one and the same type are taken out of the containers 19 in a single movement. As a result, the number of movements of the slow-running goods in the warehouse is strongly restricted, which saves time and energy.

If one would work the other way around, and the slow-running goods were only added to the packagings 16 at the end of the cycle after the other goods of the order concerned had already been collected, a container 19 would have to be taken to the first work station 4 for each article as soon as the packaging 16 presents itself.

Another advantage is that the time that used to be necessary to make a suitable packaging is now available to handle more orders.

The above-mentioned second work stations 18 in the figures are designed for handling returned goods of customers.

The goods that are returned over a certain period are inputted in the central computer, for example by means of a scanner or the like, after which they are placed in a collecting bin 22.

Next, the returned goods are scanned in one by one by an operator 20 at the above-mentioned second work station 18, and these goods are put either on the first transportation system 5 so as to use them for an order, or, if these goods are not part of any order whatsoever, they are put in a container 23 so as to be automatically stocked again, depending on the instructions of the central computer.

An advantage is that, as opposed to the known methods, the returned goods do not have to be sorted first and stocked again, which saves man-hours in this case.

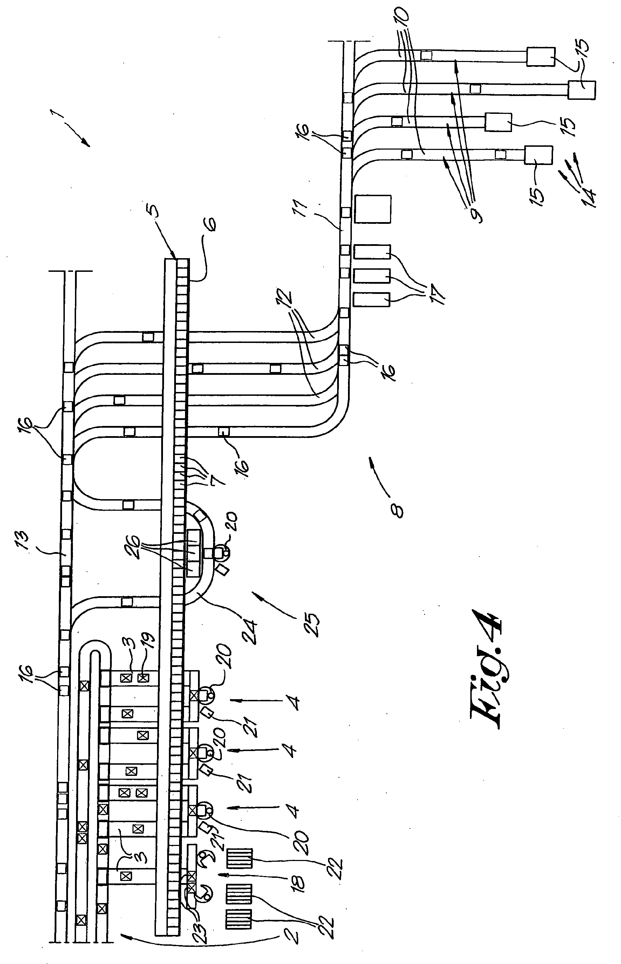

Figure 4 represents a variant of a device 1 for applying the method according to the invention, whereby the above-mentioned common discharge path 13 is provided with a bypass 24 which extends at least partly next to the above-mentioned first transportation system 5.

At this bypass 24 is provided a third work station 25 with an operator 20, equipped with one or several slides 26.

The working of this embodiment is mainly identical to that of the above-described embodiment.

When a certain order comprises several types of slow-running goods, the central computer makes sure that these goods are placed on the first transportation system 5 in the right number by the operators 20 at the first work stations 4'.

The different types of slow-running goods of one and the same order are collected one by one at the above-mentioned slides 26 where the goods, which have been loaded in the above-mentioned manner on the first transportation system 5 by an operator 20, are deposited in one of the slides 26 by the above-mentioned emptying mechanism.

All sorts of slow-running goods, except the slow-running goods of the latter type of one and the same order, are pushed in one and the same slide 26. When the latter type of slow-running goods of such an order has been put on the first transportation system 5, a packaging 16 is manufactured whose size corresponds to the size of the total order.

The above-mentioned latter slow-running article of the order concerned is pushed on top of an above-mentioned branch 12 in a packaging 16 on the second transportation system 8.

Next, this packaging 16 is derived to the above-mentioned third work station 25 by means of the bypass 24, where the above-mentioned packaging 16 for the operator 20 is brought to a standstill.

By means of a signal is indicated from which slide 26 the operator 20 must take goods to place in the above-mentioned packaging 16.

When the slow-running goods concerned have been placed in the above-mentioned packaging 16, the packaging 16 is guided back to the common discharge path 13 via the bypass 24 for collecting additional less slowly running or fast-running goods for the order concerned in the warehouse.

The present invention is by no means limited to the embodiments given as an example and represented in the drawings; on the contrary, such a method for handling slow-running goods can be made according to different variants while still remaining within the scope of the invention.

## Claims

1. Method for collecting goods in a warehouse, more particularly what are called slow-running goods, and for handling returned goods, whereby the slow-running goods together with other goods are part of an order which is processed by a central computer, **characterized in that**, in a first work station (4), the above-mentioned slow-running goods which are supplied in a specific order by an automatic supply system (2) are placed on a first transportation system (5) as a function of the instructions of a central computer; **in that** in an other station, by order of the above-mentioned central computer, a suitable packaging (16) for the order concerned is manufactured and loaded on a second transportation system (8) which runs under the first transportation system (5); and **in that** the central computer controls both above-mentioned transportation systems (5 and 8) in such a manner that the slow-running goods are guided above, or practically above, the corresponding packaging (16) on the second transportation system (8), and **in that** these goods are subsequently deposited in the packaging (16) concerned, after which this packaging (16) is carried further by the second transportation system (8) to further finish the order.

2. Method according to claim 1, **characterized in that** the above-mentioned packagings (16) are provided with a packing note, an invoice or the like for the order concerned, before the above-mentioned slow-running goods are deposited in the packaging (16).

3. Method according to claim 1, **characterized in that** the goods are loaded in bins (7) on the above-mentioned first transportation system (5) which are provided on a conveyor belt (6) and which are each equipped with an integrated emptying mechanism.

4. Method according to claim 3, **characterized in that** the above-mentioned slow-running goods are deposited in the packaging (16) concerned by means of the above-mentioned emptying mechanism.

5. Method according to claim 1, **characterized in that** the above-mentioned packagings (16) are manufactured automatically in manufacturing stations (15) which are erected along the second transportation system (8).

6. Method according to claim 5, **characterized in that** packagings (16) for the slow-running goods are manufactured at the time the above-mentioned slow-running goods are placed on the above-mentioned first transportation system (5).

7. Method according to claim 1, **characterized in that** at the first work station (4), by order of the above-mentioned central computer, per order, an amount of slow-running goods of the type concerned, determined by the computer, is loaded onto the above-mentioned first transportation system (5), each in a different bin (7).

8. Method according to claim 1, **characterized in that** returned goods are collected in a second work station (18) which is erected along the above-mentioned first transportation system (5), and **in that** they are identified one by one in random order whereby, on the basis of this identification, the above-mentioned central computer will check whether the above-mentioned returned goods occur in an order waiting to be processed, and **in that**, depending on the instructions of the central computer, these returned goods are either put one after the other on the first transportation system so as to be used for an order, or, if the article is not part of any order whatsoever, they are put in a container (23) so as to be automatically stocked again.

9. Method according to claim 1, **characterized in that** the slow-running goods, which are part of an order with several types of slow-running goods, are collected in a separate third work station (25) in anticipation of the latter type of slow-running goods to be provided in a suitable packaging (16), after which the pre-collected slow-running goods are put in this packaging (16).
